# FASCICULE DE BREVET EUROPEEN

(11) **EP 1 928 739 B1**
(45) Date de publication et mention de la délivrance du brevet: **09.12.2009**
(21) Numéro de dépôt: 06793751.6
(22) Date de dépôt: 22.09.2006
(51) Int. Cl.: B64D 27/26

(54) **PROCEDE DE MONTAGE D'UN MOTEUR D'AERONEF SUR UNE STRUCTURE RIGIDE D'UN MAT D'ACCROCHAGE DU MOTEUR**
VERFAHREN ZUR MONTAGE EINES FUGZEUGMOTORS AUF EINER STARREN STREBENSTRUKTUR ZUR SICHERUNG DES MOTORS
METHOD FOR MOUNTING AN AIRCRAFT ENGINE ON A RIGID STRUCTURE OF A STRUT FOR LOCKING THE ENGINE

(30) Priorité: 26.09.2005 FR 0552868
(43) Date de publication de la demande: 11.06.2008
(73) Titulaire: Airbus France SAS, 31060 Toulouse (FR)
(72) Inventeur: LAFONT, Laurent, F-31320 Pechbusque (FR); JOURNADE, Frédéric, F-31100 Toulouse (FR); RENAUD, Eric, F-31480 Brignemont (FR)
(74) Mandataire: Ilgart, Jean-Christophe
(86) Numéro de dépôt international: PCT/EP2006/066633
(87) Numéro de publication internationale: WO 2007/033993

(56) Documents cités:
- EP-A- 1 281 615
- US-A- 4 943 013
- US-A- 5 474 258

## Description

### DOMAINE TECHNIQUE

La présente invention se rapporte de façon générale à un procédé de montage d'un moteur d'aéronef sur une structure rigide d'un mât d'accrochage du moteur, ce type de mât d'accrochage, également appelé « EMS » (de l'anglais « Engine Mounting Structure »), permettant par exemple de suspendre un turbomoteur au-dessous de la voilure de l'aéronef, ou bien de monter ce turbomoteur au-dessus de cette même voilure.

A titre indicatif, l'invention trouve une application pour tout type d'aéronef équipé par exemple de turboréacteurs ou de turbopropulseurs.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, souvent du type « caisson », c'est-à-dire formée par l'assemblage de longerons supérieur et inférieur et de deux panneaux latéraux raccordés entre eux par l'intermédiaire de nervures transversales, ce caisson étant fermé vers l'avant et vers l'arrière respectivement par l'intermédiaire d'une nervure de fermeture avant et d'une nervure de fermeture arrière.

D'autre part, le mât est muni d'un système de montage du moteur interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à l'attache moteur arrière fixée sur le carter de ce dernier.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Dans les réalisations de l'art antérieur, le système de montage du moteur comporte une attache avant, dite attache de soufflante en raison du fait qu'elle est destinée à être montée fixement sur le carter de soufflante du moteur, qui comporte un corps d'attache disposant d'une surface de contact horizontale plaquée contre une surface de contact horizontale de la structure rigide, ces surfaces de contact étant également appelées surfaces de fixation. L'interface de fixation horizontale formée par ces deux surfaces s'étend donc selon un plan défini par les directions longitudinale et transversale du mât d'accrochage, et se situe généralement au niveau d'une surface externe du longeron inférieur du caisson dans le cas où le moteur est destiné à être suspendu sous la voilure de l'aéronef. En effet, le corps d'attache de l'attache moteur avant est généralement fixé sur le longeron inférieur du caisson, en étant agencé sous celui-ci.

De façon analogue, l'attache arrière comporte habituellement un corps d'attache disposant également d'une' surface de contact horizontale plaquée contre une surface de contact horizontale de la structure rigide.

Avec un tel agencement, le procédé de montage du moteur sur la structure rigide est généralement mis en oeuvre en déplaçant verticalement le moteur vers le haut jusqu'à obtenir un plaquage des surfaces de contact les unes contre les autres, puis en montant des organes de fixation entre les corps d'attache et la structure rigide.

Cependant, il a été remarqué que cette façon de procéder conduisait à certaines difficultés de montage, notamment en terme d'accessibilité pour la manipulation des organes de fixation destinés à assurer l'assemblage des corps d'attache pourvus de surfaces de contact horizontales.

L'arrière-plan technologique illustrant la fixation moyennant un pion de cisaillement est illustré par le document US-A-4943013.

### EXPOSÉ DE L' INVENTION

L'invention a donc pour but de proposer un procédé de montage d'un moteur d'aéronef sur une structure rigide d'un mât d'accrochage du moteur, remédiant à l'inconvénient mentionné ci-dessus relatif aux réalisations de l'art antérieur.

Pour ce faire, l'invention a pour objet un procédé de montage d'un moteur d'aéronef sur une structure rigide d'un mât d'accrochage du moteur, ce procédé comportant une étape de fixation, sur cette structure rigide, d'un corps d'attache d'une attache moteur préalablement monté sur un carter du moteur, ce corps d'attache étant destiné à être plaqué contre une surface de contact de la structure rigide orientée vers l'avant, et fixé sur cette structure rigide par l'intermédiaire d'au moins un pion de cisaillement traversant un premier orifice primaire et un second orifice primaire pratiqués respectivement dans le corps d'attache et dans la structure rigide. L'étape de fixation du corps d'attache sur la structure rigide comprend les opérations successives suivantes :
- pré-positionnement du moteur par rapport au mât d'accrochage dans le but de mettre le premier orifice primaire en regard du second orifice primaire ; et
- introduction d'un axe équipé d'une tête bombée de centrage à travers les deux orifices primaires en regard, de sorte que cet axe équipé de la tête bombée de centrage et logé dans les deux orifices primaires constitue le pion de cisaillement.

Ainsi, l'invention proposée a notamment pour particularité de mettre en oeuvre une structure rigide disposant d'une surface de contact orientée vers l'avant, contrairement à ce qui était rencontré dans les réalisations de l'art antérieur dans lesquelles les surfaces de contact prévues sur la structure rigide et destinées à recevoir des corps d'attache d'attaches moteur étaient orientée horizontalement, vers le bas.

Par conséquent, en raison de la disposition particulière de cette surface de contact, qui peut donc par exemple être orientée sensiblement verticalement, c'est-à-dire dans un plan défini par des directions transversale et verticale du mât, ou bien encore légèrement inclinée par rapport à la verticale tout en restant préférentiellement parallèle à la direction transversale, il est avantageusement obtenu une meilleure accessibilité pour la manipulation des organes de fixation destinés à assurer l'assemblage d'un corps d'attache sur la structure rigide, que ce soit dans le cadre de la fixation de l'attache moteur avant ou dans le cadre de la fixation de l'attache moteur arrière. Dans ces deux cas, le corps d'attache est donc un corps d'attache avant ou un corps d'attache arrière, respectivement.

A titre d'exemple illustratif, dans le cas de la fixation du corps d'attache de l'attache avant, on peut alors avantageusement prévoir de fixer ce corps sur une surface avant de la nervure de fermeture avant de la structure rigide en forme de caisson. L'ensemble de la structure rigide étant située en arrière par rapport à l'interface de fixation, l'opérateur bénéficie par voie de conséquence d'un espace libre à l'avant de cette interface qui lui facilite grandement la manipulation des différents éléments utilisés pour réaliser la fixation du corps d'attache.

L'opération de pré-positionnement du moteur est effectuée de manière à ce que les deux orifices primaires soit pré-centrés, c'est-à-dire qu'ils soient grossièrement alignés, avant de mettre en oeuvre l'opération d'introduction, dans ces mêmes orifices primaires, de l'axe destiné à constituer ultérieurement le pion de cisaillement permettant le transfert des efforts du moteur vers le mât d'accrochage.

Ensuite, il est donc entrepris cette opération d'introduction de l'axe dans les orifices primaires, cet axe étant pourvu d'une tête bombée de centrage dont la fonction est, durant l'introduction de l'axe, de corriger progressivement le centrage grossier entre les deux orifices primaires si cela s'avère nécessaire, afin d'aboutir à un centrage parfait entre ces deux derniers.

Naturellement, il est noté que le pré-positionnement du moteur par rapport à la structure rigide est effectué avec suffisamment de précision de manière à ce que l'axe à tête bombée puisse pénétrer successivement dans le premier puis dans le second des orifices primaires, ou inversement, en engendrant la correction progressive de centrage se traduisant par un mouvement relatif entre le moteur et la structure rigide, et ce malgré la charge verticale importante associée au moteur.

Enfin, il est indiqué qu'une fois l'opération d'introduction de l'axe achevée, ce dernier est ensuite destiné à rester à demeure dans les deux orifices primaires, afin de constituer le pion de cisaillement entre le corps d'attache et la structure rigide. Par conséquent, l'une des particularités de l'invention réside dans le fait que la tête bombée de centrage, qui peut préférentiellement prendre la forme d'une olive, est tout d'abord employée durant le montage pour assurer le centrage progressif des orifices primaires jusqu'au centrage parfait, puis est ensuite utilisée pour constituer une partie du pion de cisaillement servant à faire transiter des efforts vers la structure rigide durant le fonctionnement du moteur.

De préférence, lorsqu'il est prévu plusieurs pions de cisaillement entre le corps d'attache et la structure rigide, l'opération d'introduction d'un axe équipé d'une tête bombée de centrage est réitérée autant de fois que le nombre de pions de cisaillement prévus. Dans un tel cas, on prévoit de préférence que l'opération initiale de pré-positionnement du moteur est effectuée de manière à mettre tous les premiers orifices primaires en regard de leurs seconds orifices primaires respectivement associés.

Préférentiellement, cette opération de pré-positionnement consiste :
- à approcher le moteur du mât d'accrochage de manière à pouvoir introduire un premier axe de support à travers un premier orifice secondaire et un second orifice secondaire pratiqués respectivement dans le corps d'attache et dans la structure rigide, et de manière à pouvoir introduire un second axe de support à travers un premier orifice secondaire et un second orifice secondaire également pratiqués respectivement dans le corps d'attache et dans la structure rigide, chacun des deux axes de support étant de diamètre inférieur au diamètre des premier et second orifices secondaires associés ; puis
- à redescendre le moteur jusqu'à obtenir un appui d'une partie supérieure de chacun des deux premiers orifices secondaires du corps d'attache, contre son axe de support associé.

Ainsi, la mise en place de ces axes de support, également appelés supports d'indexation, permet d'assurer un maintien du moteur légèrement en dessous de sa position finale par rapport au mât d'accrochage, cette position étant tout à fait appropriée en vu de l'introduction ultérieure de l'axe à tête de centrage dans les orifices primaires.

De préférence, suite à la mise en place de chaque axe équipé d'une tête bombée de centrage, il est procédé à une extraction de ces axes de support hors des orifices secondaires, à l'aide d'un extracteur adapté. Il est noté que dans le cas préférentiel et avantageux où les orifices secondaires susmentionnés sont ultérieurement destinés à recevoir des pions de cisaillement de secours, dits pions « Fail Safe », cette extraction est alors suivie d'une introduction de deux pions de cisaillement de secours à travers ces mêmes orifices secondaires.

Toujours de manière préférentielle, l'opération de pré-positionnement est réalisée de sorte que le corps d'attache soit situé en avant par rapport à la surface de contact de la structure rigide, et l'opération d'introduction de l'axe équipé d'une tête bombée de centrage est réalisée de telle sorte que cet axe soit d'abord introduit dans son premier orifice primaire associé, avant de pénétrer dans son second orifice primaire associé. Dans un tel cas, pour faciliter l'introduction de la tête bombée de centrage dans le second orifice primaire, chaque second orifice primaire est chanfreiné dans sa partie avant.

Préférentiellement, l'étape de fixation du corps d'attache sur la structure rigide comporte également une opération de mise en place de boulons de traction entre ces deux éléments.

De plus, comme cela a été mentionné précédemment, on peut prévoir que l'étape décrite ci-dessus de fixation du corps d'attache sur la structure est réalisée dans le cadre de la fixation d'une attache moteur arrière ou dans le cadre de la fixation d'une attache moteur avant. Bien entendu, le procédé selon l'invention pourrait comporter deux étapes de fixation telles que celle qui vient d'être écrite, l'une étant destinée à la fixation de l'attache avant, et l'autre à la fixation de l'attache arrière.

Lorsque cette étape de fixation est réalisée dans le cadre de la fixation d'une attache moteur avant, on prévoit que la surface de contact de la structure rigide en forme de caisson est définie par une surface avant d'une nervure de fermeture avant du caisson.

Dans ce cas, la surface de contact est de préférence prévue pour être sensiblement orientée dans un plan défini par une direction transversale et une direction verticale du mât, mais pourrait être alternativement inclinée par rapport à la verticale tout en restant orientée vers l'avant comme cela a déjà été indiqué ci-dessus, l'inclinaison pouvant alors aller jusqu'à 25° par rapport à la verticale, c'est-à-dire par rapport au plan dénommé ci-dessus. Par ailleurs, chaque axe équipé d'une tête bombée de centrage est destiné à être introduit dans ses orifices primaires associés selon une direction longitudinale du mât. D'une manière générale, on s'assure de préférence que les pions de cisaillement constitués par les axes précités soient disposés orthogonalement à la surface de contact de la structure rigide, donc de préférence orthogonalement à la nervure de fermeture avant dans le cas de l'attache avant.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef comportant un mât d'accrochage, cet ensemble étant montré dans une configuration dans laquelle son moteur a été monté sur une structure rigide du mât d'accrochage lors de la mise en oeuvre d'un procédé de montage selon un mode de réalisation préféré de la présente invention ;
- la figure 2 représente une vue en perspective schématisant la reprise des efforts effectuée par le système de montage du moteur équipant le mât d'accrochage montré sur la figure 1 ;
- la figure 3 représente une vue détaillée en perspective de la partie avant du mât montré sur la figure 1 ;
- la figure 4 représente une vue en perspective de la nervure de fermeture avant du caisson appartenant au mât montré sur la figure 3 ; et
- les figures 5a à 5h représentent des vues schématisant différentes opérations d'une étape de fixation dudit procédé de montage, cette étape consistant à fixer un corps d'attache d'une attache moteur sur la structure rigide du mât d'accrochage.

### EXPOSÉ DÉTAILLÉ DE MODES DE RÉALISATION PRÉFÉRÉS

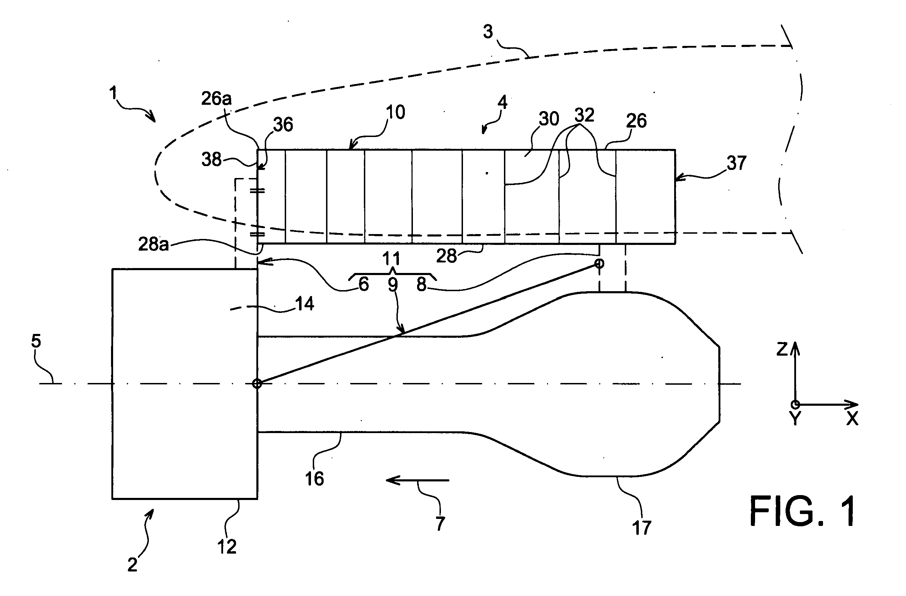

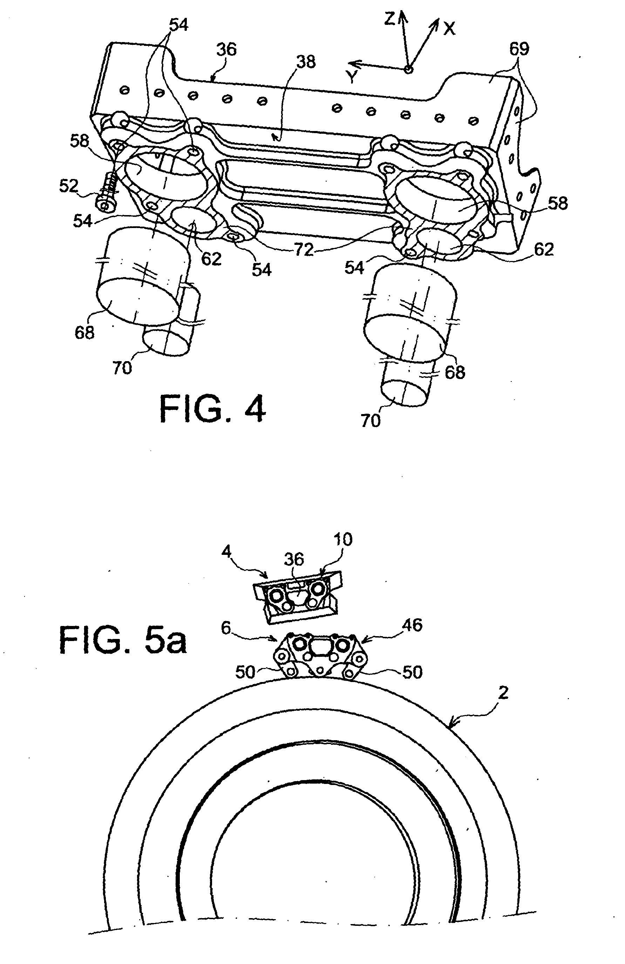

En référence à la figure 1, on voit un ensemble moteur 1 pour aéronef destiné à être fixé sous une aile 3 de cet aéronef, cet ensemble 1 étant pourvu d'un mât d'accrochage 4 et représenté dans une configuration dans laquelle son moteur a été monté sur une structure rigide du mât d'accrochage, suite à la mise en oeuvre d'un procédé de montage selon un mode de réalisation préféré de la présente invention qui sera détaillé ultérieurement en référence aux figures 5a à 5h.

Globalement, l'ensemble moteur 1 comporte un moteur tel qu'un turboréacteur 2 et le mât d'accrochage 4, ce dernier étant notamment muni d'une structure rigide 10 et d'un système de montage du moteur 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée. A titre indicatif, il est noté que l'ensemble 1 est destiné à être entouré d'une nacelle (non représentée sur cette figure), et que le mât d'accrochage 4 comporte une autre série d'attaches (non représentées) permettant d'assurer la suspension de cet ensemble 1 sous la voilure de l'aéronef.

Dans toute la description qui va suivre, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4, également dénommée structure primaire, ont été représentées. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, la pluralité d'attaches moteur est constituée par une attache moteur avant 6 et une attache moteur arrière 8. Le dispositif de reprise 9 prend par exemple la forme de deux bielles latérales (une seule étant visible en raison de la vue de côté) raccordées d'une part à une partie arrière du carter de soufflante 12, et d'autre part sur un palonnier, lui-même monté sur l'attache arrière 8.

L'attache moteur avant 6 est solidarisée au carter de soufflante 12, et est conçue de manière à pouvoir reprendre des efforts générés par le turboréacteur 2 selon les directions Y et Z. A titre indicatif, cette attache avant 6 pénètre de préférence dans une portion d'extrémité circonférentielle du carter de soufflante 12.

L'attache moteur arrière 8 est globalement interposée entre le carter d'éjection 17 et la structure rigide 10 du mât. Elle est conçue classiquement de manière à pouvoir reprendre des efforts générés par le turboréacteur 2 selon les direction Y et Z, mais pas ceux s'exerçant selon la direction X.

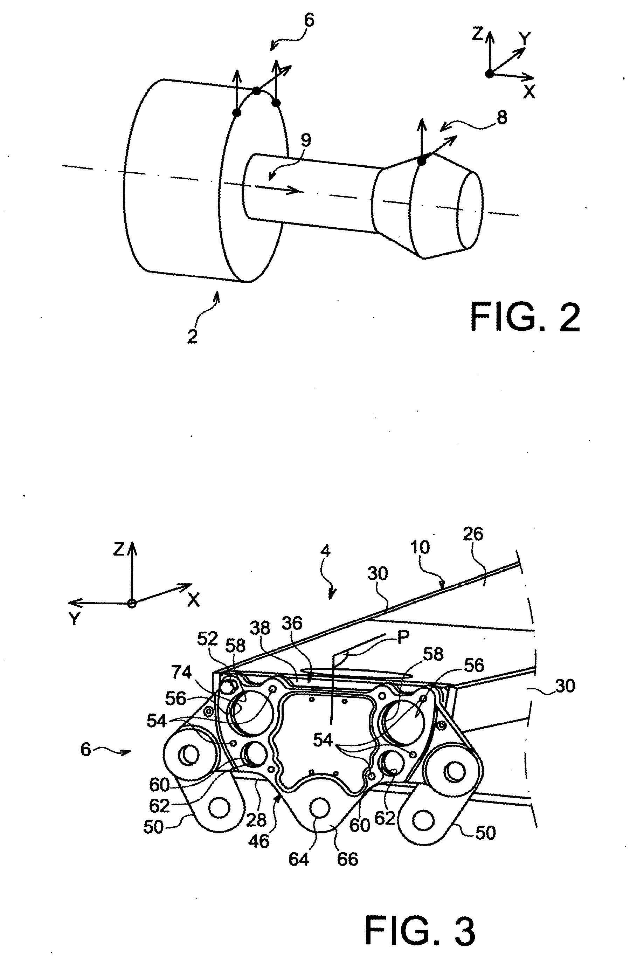

De cette manière, avec le système de montage 11 de nature isostatique, comme cela est montré schématiquement sur la figure 2, la reprise des efforts s'exerçant selon la direction X s'effectue à l'aide du dispositif 9, la reprise des efforts s'exerçant selon la direction Y s'effectue à l'aide de l'attache avant 6 et de l'attache arrière 8, et la reprise des efforts s'exerçant selon la direction Z s'effectue également conjointement à l'aide des attaches 6 et 8. D'autre part, la reprise du moment s'exerçant selon la direction X s'effectue verticalement à l'aide de l'attache avant 6, la reprise du moment s'exerçant selon la direction Y s'effectue verticalement à l'aide de l'attache avant 6 conjointement avec l'attache 8, et la reprise du moment s'exerçant selon la direction Z s'effectue transversalement également à l'aide de l'attache 6 et de l'attache 8.

Toujours en référence à la figure 1, on peut apercevoir que la structure 10 présente la forme d'un caisson s'étendant dans la direction X, ce caisson étant également appelé caisson de torsion. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres. De plus, parmi les nervures transversales précitées, on compte une nervure de fermeture avant 36 du caisson, ainsi qu'une nervure de fermeture arrière 37 du caisson, ces nervures situées aux extrémités du caisson étant donc globalement agencées dans des plans YZ.

A nouveau en référence à la figure 1 montrant un cas où le moteur 2 est destiné à être suspendu sous la voilure 3, il est prévu que la nervure de fermeture avant 36 de la structure 10 serve d'appui frontal pour un corps d'attache de l'attache moteur avant 6. Plus précisément, la nervure 36 dispose d'une surface avant 38 ou surface extérieure, globalement agencée selon un plan YZ mais pouvant disposer d'une géométrie complexe notamment dans le but de définir des excroissances, contre laquelle ce même corps d'attache est destiné à être plaqué.

De préférence, on prévoit qu'une portion de cette surface avant 38 définit une surface de contact avant (non référencée) ou surface de fixation avant destinée à être plaquée et au contact d'une surface de contact arrière (non référencée) ou surface de fixation arrière appartenant au corps d'attache de l'attache avant 6, comme cela apparaîtra ci-après dans la description du procédé de montage.

Ainsi, cette disposition particulière du corps d'attache permet d'obtenir un recouvrement partiel entre la nervure de fermeture avant 36 et ce même corps d'attache de l'attache avant 6, selon la direction Z, ce qui permet globalement de compacter la structure 10 avec l'ensemble de l'attache moteur avant, et donc de diminuer la protubérance formée par le mât d'accrochage au-dessus de la nacelle du moteur, au droit de cette attache 6, et de réduire ainsi la traînée aérodynamique.

En référence à présent à la figure 3 montrant de façon plus détaillée la partie avant du mât 4 dont un plan P médian vertical parallèle à la direction X constitue un plan de symétrie pour ce même mât, on peut voir que l'attache moteur avant 6 comporte donc un corps d'attache 46 prenant la forme d'une ferrure orientée transversalement dans un plan YZ, et étant rapportée solidairement sur la structure rigide 10 en étant plaquée contre la surfacé avant 38 de la nervure de fermeture 36.

Pour assurer cet assemblage, l'attache 6 peut comporter des boulons de traction 52 (un seul d'entre eux étant représentés), ces boulons de traction étant orientés selon la direction X et traversant des orifices 54 pratiqués à travers le corps 46 et la nervure 36.

Par ailleurs, l'attache 6 comporte aussi deux pions de cisaillement (non représentés sur la figure 3) également appelés pions de cisaillement actifs et disposés symétriquement par rapport au plan P, ces pions étant aussi préférentiellement orientés selon la direction X. Chaque pion de cisaillement est destiné à traverser un premier orifice primaire 56 pratiqué dans le corps 46, ainsi qu'un second orifice primaire 58 pratiqué dans la nervure 36 et étant aligné dans la direction X avec l'orifice 56.

Au niveau de deux extrémités latérales du corps d'attache 46, l'attache moteur avant 6 présente deux chapes au niveau desquelles sont articulées deux manilles/biellettes 50, chacune de ces dernières formant partiellement une demi-attache de l'attache avant à travers lesquelles peuvent transiter les efforts s'exerçant selon la direction Z. De façon connue de l'homme du métier, ces manilles 50 sont également articulées au niveau de leur autre extrémité sur des chapes appartenant également à l'attache avant 6, et étant rapportées fixement sur le carter du moteur 2.

La conception décrite ci-dessus permet de comprendre que cette attache avant est tout à fait adaptée pour assurer la reprise des efforts s'exerçant selon les directions Y et Z, et également pour assurer la reprise du moment s'exerçant selon la direction X.

A ce titre, on prévoit de préférence que pour chacun des deux groupes d'orifices primaires 56, 58 précités, il est associé un groupe d'orifices secondaires 60, 62 respectivement prévus dans le corps 46 et la nervure 36, chaque groupe d'orifices secondaires étant prévu pour loger un pion de cisaillement de secours (non représenté) dit pion « Fail Safe ». En effet, le montage de chaque pion de secours dans le premier orifice secondaire 60 et le second orifice secondaire 62 s'effectue avec un jeu radial de manière à ce qu'aucun effort ne transite par ce dernier en conditions normales, et de sorte que ce pion puisse constituer un nouveau chemin d'effort en cas de rupture du pion de cisaillement principal auquel il est associé.

Il est noté qu'une alternative de réalisation peut, de façon connue, consister à prévoir que les deux pions de cisaillement soient conçus de manière à intégrer la fonction « Fail Safe » de secours, ce qui permet de limiter l'usage des pions et orifices secondaires 60, 62 aux opérations de pré-positionnement.

Toujours à titre indicatif, il est noté que cette fonction de secours « Fail Safe » est également assurée pour la jonction entre le corps d'attache 46 et le carter moteur, par l'intermédiaire d'un axe 64 « Fail Safe » monté avec jeu au niveau d'une partie centrale inférieure 66 du corps 46.

En référence à présent à la figure 4 montrant la nervure de fermeture avant 36 du caisson, on peut se rendre compte que la surface avant 38 de cette nervure dispose d'une surface globalement orientée selon un plan YZ, mais qui présente en réalité de préférence des excroissances faisant saillie vers l'avant. Par ailleurs, la nervure 36 dispose de quatre ailettes 69 destinées à permettre sa fixation sur les longerons 26, 28 ainsi que sur les deux panneaux latéraux 30.

Les excroissances susmentionnées sont préférentiellement localisées au niveau des portions de la nervure 36 qui délimitent les orifices 54, 58, 62 pour loger les boulons 52, les pions de cisaillement 68 et les pions de secours « Fail Safe » 70. Par ailleurs, c'est au niveau de la partie la plus avant de ces excroissances que la surface avant 38 délimite la surface de contact avant 72, destinée à être plaquée et au contact de la surface de contact arrière du corps d'attache 46. Cette surface de contact 72 ou surface de fixation, hachurée sur la figure 4, est de préférence sensiblement orientée selon un plan YZ, et donc globalement située au niveau des contours des orifices 54, 58, 62 précités.

Naturellement, il est à comprendre que la surface de contact arrière ou surface de fixation du corps 46, référencée « 74 » sur la figure 3, dispose de préférence d'une forme complémentaire de celle de la surface 72, et est donc de préférence sensiblement orientée dans le même plan YZ que cette dernière.

A présent en référence aux figures 5a à 5h, il va être décrit un procédé de montage du moteur 2 sur le mât 4 selon un mode de réalisation préféré de la présente invention, et plus particulièrement une étape de fixation du corps d'attache 46 de l'attache avant 6 sur la nervure de fermeture avant 36 du caisson 10.

La figure 5a montre que préalablement à la réalisation de cette étape de fixation, le moteur 2 porte le corps d'attache 46, notamment à l'aide des manilles/biellettes 50 articulées sur le carter de soufflante. De plus, le moteur repose dans une position dite verticale ou droite dans laquelle le corps d'attache 46 se situe vers le haut, tandis que le mât 4 occupe une position quelconque au-dessus du moteur 2.

Avant de procéder au déplacement du moteur 2 par l'intermédiaire de moyens de hissage conventionnels, le corps 46 est équipé d'un outillage permettant de le bloquer en position par rapport au moteur, et donc d'interdire un pivotement de ce corps 46 autour de ses deux manilles/biellettes 50 associées. Ainsi, l'opération ultérieure de pré-positionnement n'est avantageusement pas perturbée par un mouvement relatif entre le corps 46 et le moteur 2.

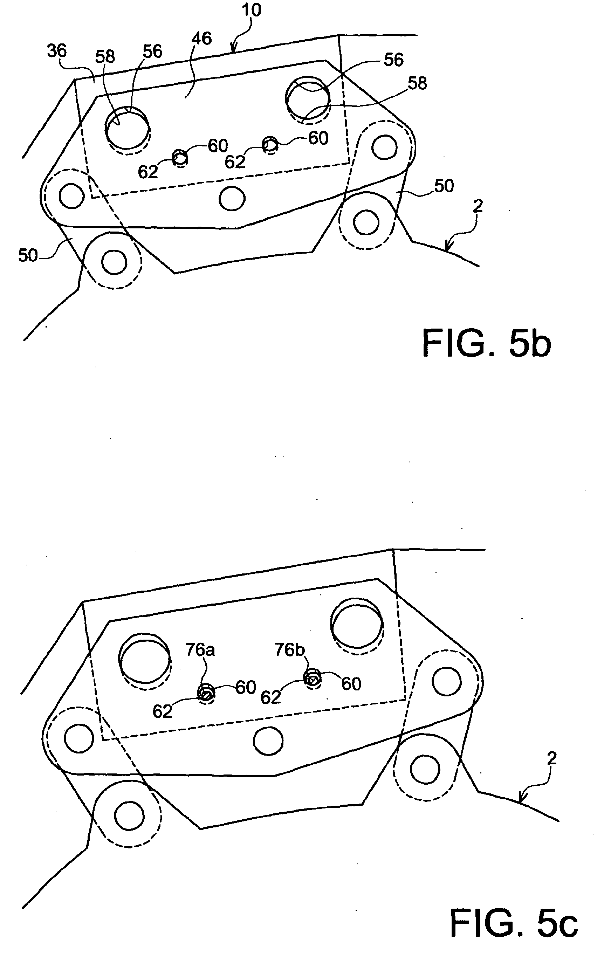

L'opération de pré-positionnement du moteur 2 par rapport au mât 4 peut alors débuter, son but étant de mettre en regard chacun des deux premiers orifices primaires 56 avec son second orifice primaire 58 associé. On fait en sorte que le pré-positionnement du moteur 2 soit effectué de manière à obtenir un centrage grossier entre les orifices primaires, en hissant préférentiellement le moteur 2 dans une position légèrement supérieure à sa position finale par rapport au mât 4. Par conséquent, comme on peut l'apercevoir sur la figure 5b, les premiers orifices primaires 56 sont donc légèrement décalés vers le haut par rapport aux seconds orifices primaires 58 pratiqués dans la nervure 36, de même que les premiers orifices secondaires 60 sont donc légèrement décalés vers le haut par rapport aux seconds orifices secondaires 62 pratiqués dans cette même nervure.

Ensuite, l'opération de pré-positionnement du moteur 2 est poursuivie en introduisant un premier axe de support 76a à travers le premier groupe d'orifices secondaires 60, 62, ainsi qu'en introduisant et un second axe de support 76b à travers le second groupe d'orifices secondaires 60, 62.

Bien entendu, les deux axes de support 76a, 76b, également appelés supports d'indexation, disposent d'un diamètre inférieur au diamètre des orifices secondaires 60, 62, le rapport entre ces diamètres assurant des jeux de fonctionnement et pouvant, par exemple, être compris entre 0,6 et 0,9. Cette spécificité est naturellement prévue de sorte que l'introduction des axes 76a, 76b puisse être réalisée sans gêne malgré la présence du décalage vertical entre les divers orifices de diamètre sensiblement identiques. Après l'introduction de ces axes 76a, 76b réalisée de préférence manuellement et sans friction dans les orifices secondaires, ceux-ci reposent ensuite par gravité sur une partie inférieure de leur premier orifice secondaire associé 60, sans être au contact de leur second orifice secondaire associé 62 comme le montre la figure 5c.

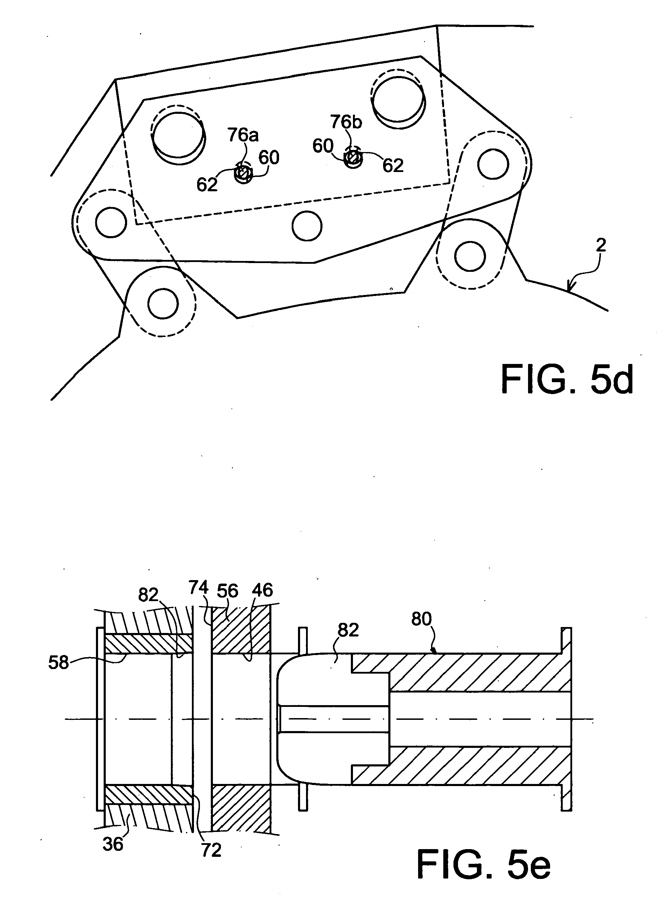

Ensuite, l'opération consiste à redescendre le moteur 2, toujours par l'intermédiaire des moyens de hissage, jusqu'à obtenir un appui d'une partie supérieure de chacun des deux premiers orifices secondaires 60, contre son axe de support 76a, 76b associé. Dans cette position montrée sur la figure 5d, il est également noté que les deux axes de support 76a, 76b reposent sur une partie inférieure de leur second orifice secondaire 62 associé. C'est cette mise en cisaillement des axes 76a, 76b qui permet à elle seule de maintenir le pré-positionnement du moteur par rapport au mât, ce pré-positionnement étant alors tel que le moteur 2 se situe légèrement au-dessous de sa position finale par rapport au mât 4, comme cela est clairement visible sur la figure 5d. Ensuite, le pré-positionnement est achevé par la mise en contact des surfaces de contact 72 et 74 (référencées sur la figure 5e) par un outillage adapté, par exemple du type serre-joint.

Par conséquent, une fois cette opération achevée, on peut donc comprendre que le moteur n'a pas besoin de coopérer avec des moyens de hissage pour être maintenu dans sa position de pré-positionnement par rapport au mât 4.

Une nouvelle opération est ensuite entreprise, visant à introduire deux axes 80 respectivement dans le premier groupe d'orifices primaires et dans le second groupe d'orifices primaires.

Comme on peut l'apercevoir sur la figure 5e, chaque axe 80 est équipé d'une tête bombée de centrage 82 disposant de préférence de la forme d'une olive et étant par exemple montée par vissage ou encastrement sur un corps d'axe de l'axe 80, ce dernier étant introduit d'abord à travers le premier orifice primaire 56 du corps 46, puis à travers le second orifice primaire 58 légèrement décalé vers le haut. Ainsi, pendant l'introduction de l'axe 80 à travers le second orifice 58, la tête 82 va progressivement coopérer avec une partie avant chanfreinée 84 de ce dernier, qui est prévue pour faciliter la pénétration de l'axe 80 dans ce même orifice 58. Naturellement, la pénétration de la tête de centrage 82 de l'axe 80 dans l'orifice 58 va avoir pour conséquence de centrer progressivement les deux orifices 56, 58 de même diamètre, jusqu'à obtenir un centrage parfait entre ces derniers. A titre indicatif, il est noté que le diamètre des orifices 56, 58 est identique, au jeu près, au diamètre de l'axe 80 les pénétrant.

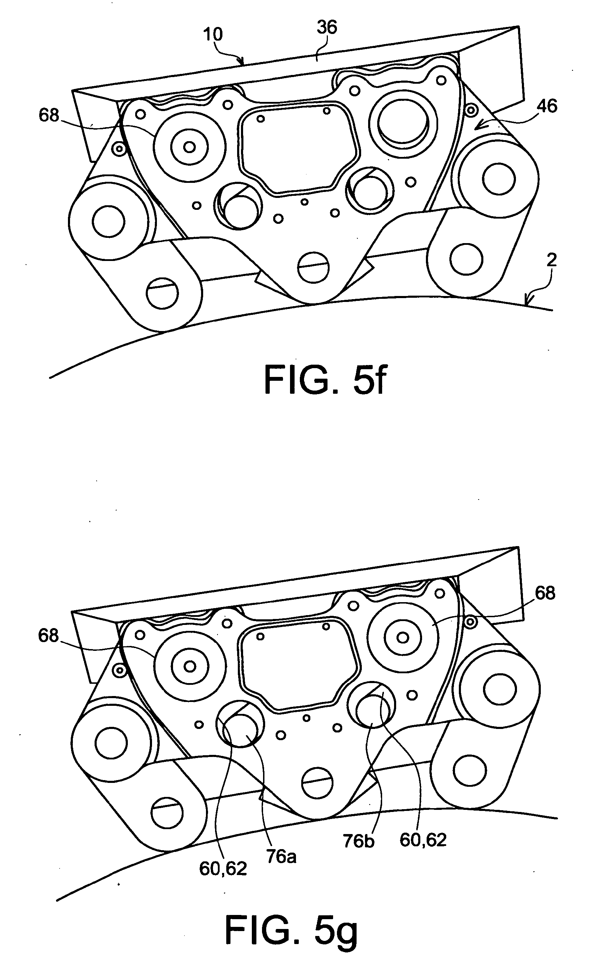

Après l'introduction de l'axe 80, celui-ci est logé dans ses deux orifices associés 56, 58, et constitue avantageusement le pion de cisaillement 68 comme cela est montré sur la figure 5f.

En référence à la figure 5g, on procède bien entendu à la même introduction d'axe pour le second groupe d'orifices primaires, afin d'obtenir la mise en place du second pion de cisaillement 68. Une fois les deux pions de cisaillement introduits dans leurs orifices primaires respectifs, simultanément ou successivement, le moteur 2 rehaussé suite au centrage des orifices 56, 58 occupe alors sa position finale par rapport au mât 4.

Dans cette position finale, les orifices secondaires 60, 62 sont également parfaitement centrés deux à deux.

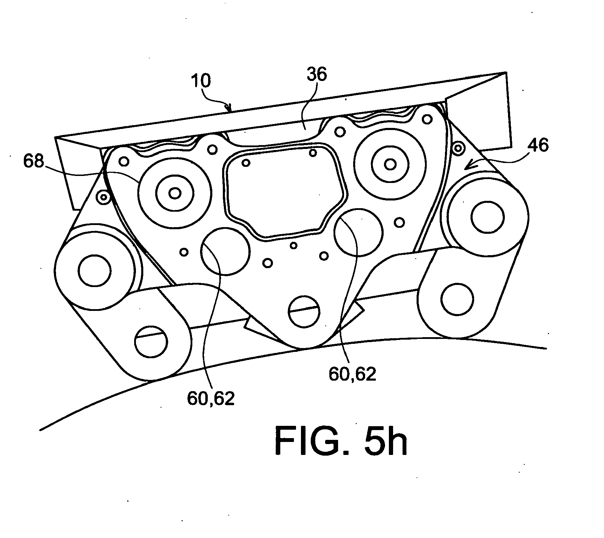

Ces axes de support 76a, 76b peuvent alors subir une extraction et laisser les orifices secondaires libres comme le montre la figure 5h, afin de permettre une opération ultérieure de mise en place des deux pions de cisaillement de secours 70 dans ces mêmes orifices secondaires 60, 62.

L'étape de fixation du corps d'attache 46 peut ensuite être poursuivie par une opération de mise en place des boulons de traction précités, également orientés selon la direction X.

Dans le procédé selon l'invention, une étape de fixation similaire peut être mise en oeuvre pour l'attache arrière 8, tandis que le montage des bielles de reprise de poussée peut s'opérer d'une manière classique connue de l'homme du métier.

Bien entendu, diverses modifications dans le cadre du texte des revendications peuvent être apportées par l'homme du métier au procédé de montage qui vient d'être décrit, uniquement à titre d'exemple non limitatif. A cet égard, on peut notamment indiquer que si ce procédé a été décrit comme permettant de suspendre le moteur sous la voilure de l'aéronef, il pourrait également être réalisé de manière à assurer une mise en place de ce moteur au-dessus de cette même voilure.

## Revendications

1. Procédé de montage d'un moteur (2) d'aéronef sur une structure rigide (10) d'un mât d'accrochage (4) du moteur, **caractérisé en ce qu'**il comporte une étape de fixation, sur ladite structure rigide (10), d'un corps d'attache (46) d'une attache moteur (6) préalablement monté sur un carter du moteur, ce corps d'attache étant destiné à être plaqué contre une surface de contact (72) de ladite structure rigide orientée vers l'avant, et fixé sur cette structure rigide (10) par l'intermédiaire d'au moins un pion de cisaillement (68) traversant un premier orifice primaire (56) et un second orifice primaire (58) pratiqués respectivement dans le corps d'attache (46) et dans la structure rigide (10), ladite étape de fixation du corps d'attache (46) sur ladite structure rigide (10) comprenant les opérations successives suivantes :
- pré-positionnement du moteur (2) par rapport au mât d'accrochage (4) dans le but de mettre le premier orifice primaire (56) en regard du second orifice primaire (58) ; et
- introduction d'un axe (80) équipé d'une tête bombée de centrage (82) à travers les deux orifices primaires en regard (56, 58), de sorte que cet axe (80) équipé de la tête bombée de centrage (82) et logé dans les deux orifices primaires (56, 58) constitue ledit pion de cisaillement (68).

2. Procédé de montage selon la revendication 1, **caractérisé en ce que** ladite opération d'introduction d'un axe (80) équipé d'une tête bombée de centrage (82) est réitérée autant de fois qu'il est prévu de pions de cisaillement (68) entre le corps d'attache (46) et la structure rigide (10).

3. Procédé de montage selon la revendication 1 ou la revendication 2, **caractérisé en ce que** ladite opération de pré-positionnement consiste :
- à approcher le moteur (2) du mât d'accrochage (4) de manière à pouvoir introduire un premier axe de support (76a) à travers un premier orifice secondaire (60) et un second orifice secondaire (62) pratiqués respectivement dans le corps d'attache (46) et dans la structure rigide (10), et de manière à pouvoir introduire un second axe de support (76b) à travers un premier orifice secondaire (60) et un second orifice secondaire (62) également pratiqués respectivement dans le corps d'attache (46) et dans la structure rigide (10), chacun desdits deux axes de support (76a, 76b) étant de diamètre inférieur au diamètre des premier et second orifices secondaires associés (60, 62) ; puis
- à redescendre le moteur (2) jusqu'à obtenir un appui d'une partie supérieure de chacun des deux premiers orifices secondaires (60) du corps d'attache (46), contre son axe de support associé (76a, 76b).

4. Procédé de montage selon la revendication 3, **caractérisé en ce que** suite à la mise en place de chaque axe (80) équipé d'une tête bombée de centrage (82), il est procédé à une extraction desdits axes de support (76a, 76b) hors desdits orifices secondaires (60, 62).

5. Procédé de montage selon la revendication 4, **caractérisé en ce que** postérieurement à ladite extraction des axes de support (76a, 76b) , il est procédé à l'introduction de deux pions de cisaillement de secours (70) à travers lesdits orifices secondaires (60, 62).

6. Procédé de montage selon l'une quelconque des revendications précédentes, **caractérisé en ce que** l'opération de pré-positionnement est réalisée de sorte que ledit corps d'attache (46) soit situé en avant par rapport à ladite surface de contact (72) de la structure rigide (10), et **en ce que** l'opération d'introduction de l'axe (80) équipé d'une tête bombée de centrage (82) est réalisée de telle sorte que cet axe soit d'abord introduit dans son premier orifice primaire associé (56), avant de pénétrer dans son second orifice primaire associé (58).

7. Procédé de montage selon la revendication 6, **caractérisé en ce que** chaque second orifice primaire (58) est chanfreiné dans sa partie avant.

8. Procédé de montage selon l'une quelconque des revendications précédentes, **caractérisé en ce que** ladite étape de fixation du corps d'attache (46) sur ladite structure rigide (10) comporte également une opération de mise en place de boulons de traction (52) entre ces deux éléments.

9. Procédé de montage selon l'une quelconque des revendications précédentes, **caractérisé en ce que** ladite attache moteur est l'attache moteur arrière (8) ou l'attache moteur avant (6).

10. Procédé de montage selon l'une quelconque des revendications précédentes, **caractérisé en ce que** l'attache moteur est l'attache moteur avant (6), et **en ce que** ladite surface de contact (72) de la structure rigide (10), celle-ci prenant la forme d'un caisson, est définie par une surface avant (38) d'une nervure de fermeture avant (36) de ce caisson.

11. Procédé de montage selon la revendication 10, **caractérisé en ce que** ladite surface de contact (72) est prévue pour être sensiblement orientée dans un plan défini par une direction transversale (Y) et une direction verticale (Z) du mât.

12. Procédé de montage selon l'une quelconque des revendications précédentes, **caractérisé en ce que** chaque axe (80) équipé d'une tête bombée de centrage (82) est destiné à être introduit dans ses orifices primaires associés (56, 58) selon une direction longitudinale (X) du mât.

## Claims

1. A method for mounting an aircraft engine (2) on a rigid structure (10) of a pylon (4) for attaching the engine, **characterized in that** it includes a step for fixing on said rigid structure (10), an attachment body (46) of an engine attachment (6) mounted before hand on an case, this attachment body being intended to be applied against a contact surface (72) of said rigid structure oriented forwards, and fixed on this rigid structure (10) via at least one shear pin (68) passing through a first primary orifice (56) and a second primary orifice (58) made in the attachment body (46) and in the rigid structure (10), respectively, said step for fixing the attachment body (46) on said rigid structure (10) comprising the following successive operations:
- pre-positioning the engine (2) relatively to the attachment pylon (4) with the purpose of putting the first primary orifice (56) facing the second primary orifice (58); and
- introducing a pin (80) equipped with a convex centering head (82) through both facing primary orifices (56, 58), so that this pin (80) equipped with the convex centering head (82) and housed in both primary orifices (56, 58) forms said shear pin (68).

2. The mounting method according to claim 1, **characterized in that** said operation for introducing a pin (80) equipped with a convex centering head (82) is repeated as many times as there are shear pins (68) provided between the attachment body (46) and the rigid structure (10).

3. The mounting method according to claim 1 or claim 2, **characterized in that** said pre-positioning operation consists of:
- bringing the engine (2) closer to the attachment pylon (4) so as to be able to introduce a first supporting pin (76a) through a first secondary orifice (60) and a second secondary orifice (62) made in the attachment body (46) and in the rigid structure (10), respectively, and so as to able to introduce a second supporting pin (76b) through a first secondary orifice (60) and a second secondary orifice (62) also made in the attachment body (46) and in the rigid structure (10), respectively, each of said both supporting pins (76a, 76b) being of a smaller diameter than the diameter of the associated first and second secondary orifices (60, 62); and then
- moving the engine (2) downwards until a support of an upper portion of each of both first secondary orifices (60) of the attachment body (46) is obtained against its associated supporting pin (76a, 76b).

4. The mounting method according to claim 3, **characterized in that** following the placement of each pin (80) equipped with a convex centering head (82), it is proceeded with extraction of said supporting pins (76a, 76b) from out of said secondary orifices (60, 62).

5. The mounting method according to claim 4, **characterized in that**, after said extraction of the supporting pins (76a, 76b), it is proceeded with introduction of two backup shear pins (70) through said secondary orifices (60, 62).

6. The mounting method according to any of the preceding claims, **characterized in that** the pre-positioning operation is performed so that said attachment body (46) is located towards the front relatively to said contact surface (72) of the rigid structure (10), and **in that** the operation for introducing the pin (80) equipped with a convex centering head (82) is performed so that this pin is first introduced in its associated first primary orifice (56) before penetrating into its associated second primary orifice (58).

7. The mounting method according to claim 6, **characterized in that** each second primary orifice (58) is bevelled in its front portion.

8. The mounting method according to any of the preceding claims, **characterized in that** said step for fixing the attachment body (46) on said rigid structure (10) also includes an operation for placing tension bolts (52) between both of these components.

9. The mounting method according to any of the preceding claims, **characterized in that** said engine attachment is the rear engine attachment (8) or the front engine attachment (6).

10. The mounting method according to any of the preceding claims, **characterized in that** the engine attachment is the front engine attachment (6), and **in that** said contact surface (72) of the rigid structure (10), the latter assuming the shape of a caisson, is defined by a front surface (38) of a front closure rib (36) of this caisson.

11. The mounting method according to claim 10, **characterized in that** said contact surface (72) is provided so as to be substantially oriented in a plane defined by a transverse direction (Y) and a vertical direction (Z) of the pylon.

12. The mounting method according to any of the preceding claims, **characterized in that** each pin (80) equipped with a convex centering head (82), is intended to be introduced in its associated primary orifices (56, 58) according to a longitudinal direction (X) of the pylon.

## Patentansprüche

1. Verfahren zur Montage eines Triebwerks (2) eines Luftfahrzeugs an einer starren Struktur (10) einer Aufhängungsstruktur (4) des Triebwerks, **dadurch gekennzeichnet, daß** es den Schritt einer Befestigung, eines Befestigungskörpers (46) einer Triebwerkbefestigung (6), der zuvor an einem Triebwerkgehäuse angebracht wurde, an der starren Struktur (10) umfaßt, wobei vorgesehen ist, daß dieser Befestigungskörper gegen eine nach vorne gerichtete Kontaktoberfläche (72) der starren Struktur gedrückt und an dieser starren Struktur (10) mit Hilfe von mindestens einem Querbolzen (68), der durch eine erste Primäröffnung (56) und eine zweite Primäröffnung (58), die in dem Befestigungskörper (46) bzw. der starren Struktur (10) ausgebildet sind, geht, befestigt wird, wobei der Schritt der Befestigung des Befestigungskörpers (46) an der starren Struktur (10) die folgenden aufeinanderfolgenden Operationen umfaßt:
- Vorpositionierung des Triebwerks (2) in Bezug auf die Aufhängungsstruktur (4) mit dem Ziel, daß sich die erste Primäröffnung (56) und die zweite Primäröffnung (58) gegenüberliegen; und
- Einführung einer Achse (80), die mit einem gewölbten Zentrierungskopf (82) ausgestattet ist, durch die zwei gegenüberliegenden Primäröffnungen (56, 58) derart, daß diese Achse (80), die mit dem gewölbten Zentrierungskopf (82) ausgestattet ist und sich in den zwei Primäröffnungen (56, 58) befindet, den Querbolzen (68) bildet.

2. Montageverfahren nach Anspruch 1, **dadurch gekennzeichnet, daß** die Operation der Einführung einer Achse (80), die mit einem gewölbten Zentrierungskopf (82) ausgestattet ist, so oft wiederholt wird, wie Querbolzen (68) zwischen dem Befestigungskörper (46) und der starren Struktur (10) vorgesehen sind.

3. Montageverfahren nach Anspruch 1 oder Anspruch 2, **dadurch gekennzeichnet, daß** die Operation der Vorpositionierung darin besteht:
- das Triebwerk (2) der Montagestruktur (4) derart zu nähern, daß eine erste Hilfsachse (76a) durch eine erste Sekundäröffnung (60) und eine zweite Sekundäröffnung (62), die in dem Befestigungskörper (46) bzw. der starren Struktur (10) ausgebildet sind, eingeführt werden kann und daß eine zweite Hilfsachse (76b) durch eine erste Sekundäröffnung (60) und eine zweite Sekundäröffnung (62), die ebenfalls in dem Befestigungskörper (46) bzw. der starren Struktur (10) ausgebildet sind, eingeführt werden kann, wobei jede der zwei Hilfsachsen (76a, 76b) einen geringeren Durchmesser als den Durchmesser der damit in Verbindung stehenden ersten und zweiten Sekundäröffnungen (60, 62) aufweist; und anschließend
- das Triebwerk (2) wieder herunterzulassen, bis ein Halt einer oberen Partie von jeder der zwei ersten Sekundäröffnungen (60) des Befestigungskörpers (46) an der damit in Verbindung stehenden Hilfsachse (76a, 76b) erreicht wird.

4. Montageverfahren nach Anspruch 3, **dadurch gekennzeichnet, daß** anschließend an das Platzieren jeder Achse (80), die mit einem gewölbten Zentrierungskopf (82) ausgestattet ist, ein Herausziehen der Hilfsachsen (76a, 76b) aus den sekundäröffnungen (60, 62) erfolgt.

5. Montageverfahren nach Anspruch 4, **dadurch gekennzeichnet, daß** nach dem Herausziehen der Hilfsachsen (76a, 76b) das Einführen von zwei Sicherungsquerbolzen (70) durch die Sekundäröffnungen (60, 62) erfolgt.

6. Montageverfahren nach einem der vorhergehenden Ansprüche, **dadurch gekennzeichnet, daß** die Operation der Vorpositionierung derart durchgeführt wird, daß sich der Befestigungskörper (46) in Bezug auf die Kontaktoberfläche (72) der starren Struktur (10) vorne befindet, und die Operation der Einführung der Achse (80), die mit einem gewölbten Zentrierungskopf (82) ausgestattet ist, derart durchgeführt wird, daß diese Achse zunächst in die damit in Verbindung stehende erste Primäröffnung (56) eingeführt wird, bevor sie die mit ihr in Verbindung stehende zweite Primäröffnung (58) durchdringt.

7. Montageverfahren nach Anspruch 6, **dadurch gekennzeichnet, daß** jede zweite Primäröffnung (58) in ihrem vorderen Teil mit einer Fase ausgebildet ist.

8. Montageverfahren nach einem der vorhergehenden Ansprüche, **dadurch gekennzeichnet, daß** der Schritt der Befestigung des Befestigungskörpers (46) an der starren Struktur (10) auch eine Operation des Platzierens von Zugbolzen (52) zwischen diesen zwei Elementen umfaßt.

9. Montageverfahren nach einem der vorhergehenden Ansprüche, **dadurch gekennzeichnet, daß** die Triebwerkaufhängung die hintere Triebwerkaufhängung (8) oder die vordere Triebwerkaufhängung (6) ist.

10. Montageverfahren nach einem der vorhergehenden Ansprüche, **dadurch gekennzeichnet, daß** die Triebwerkaufhängung die vordere Triebwerkaufhängung (6) ist und die Kontaktoberfläche (72) der starren Struktur (10), wobei diese die Form einer Kassette aufweist, durch eine vordere Oberfläche (38) einer vorderen Verschlußlippe (36) diester Kassette festgelegt ist.

11. Montageverfahren nach Anspruch 10, **dadurch gekennzeichnet, daß** vorgesehen ist, daß die Kontaktoberfläche (72) im wesentlichen in einer Ebene ausgerichtet ist, die durch eine Transversalrichtung (Y) und eine Vertikalrichtung (Z) der Struktur festgelegt ist.

12. Montageverfahren nach einem der vorhergehenden Ansprüche, **dadurch gekennzeichnet, daß** jede Achse (80), die mit einem gewölbten Zentrierungskopf (82) ausgestattet ist, vorgesehen ist, um in die dieser zugeordneten Primäröffnungen (56, 58) in Längsrichtung (X) der Struktur eingeführt zu werden.
